# EUROPEAN PATENT APPLICATION

(11) **EP 1 475 414 A1**
(43) Date of publication of application: **10.11.2004**
(21) Application number: 04010532.2
(22) Date of filing: 04.05.2004
(51) Int. Cl.: C09D 5/14, C09D 201/00, C08K 3/22, A62D 3/00

(54) **A self-decontaminating or self-cleaning coating for protection against hazardous bio-pathogens and toxic chemical agents**

(30) Priority: 05.05.2003 US 429687
(71) Applicant: Northrop Grumman Corporation, Los Angeles, CA 90067-2199 (US)
(72) Inventor: Weir, John Douglas, Huntington New York 11743 (US); Dimarzio, Donald, Northport New York 11768 (US); Pirich, Ronald Gary, Islip New York 11751 (US)
(74) Representative: Wolff, Felix, Dr.

(57) **Abstract**

A self-cleaning self-decontaminating coating capable of producing hydroxyl radicals, in the presence of UV radiation and moisture, in sufficient amounts to destroy organic contaminants on the coating surface.

## Description

### BACKGROUND OF THE INVENTION

### 1. Field of the Invention

The present invention relates to the treatment of hazardous contamination in general, and in particular to an organic coating sprayed surface-deposition methodology for the production of a self-decontaminating photocatalytic surface capable of neutralizing hazardous organic chemicals and biologicals through reaction with hydroxyl radicals produced from the interaction of a transition metal oxide and water in the presence of ultraviolet radiation.

### 2. Brief Description of Related Developments

Contamination of exposed structural surfaces with chemical or biological material can occur in both civilian and military contexts. Contamination can occur accidentally, such as during the conveyance of hazardous materials from one site to another, or can occur on purpose, such as in chemical and/or biological warfare. Such materials can remain for a significant period of time on exposed surfaces such as vehicles, aircraft, buildings, equipment, etc., and thereby remain as dangers to humans and animals that may come in contact with these surfaces.

Self-decontaminating coatings require several properties in addition to their ability to neutralize hazardous substances. The coatings must exhibit a degree of permanence over time and should desirably be self-cleaning and amenable to the incorporation of various pigments, thus making it possible to extend the time between cleanings by degrading and removing, as they are formed, marks which are gradually deposited at the surface of the substrate, in particular marks of organic origin, such as finger marks or volatile organic products present in the atmosphere, or even fungal growth.

A solution to these problems of dirty marks consists, for example, in depositing on the substrates a coating, which provides for degradation of these dirty marks by photo catalysis. Under the effect of radiation of appropriate wavelength, the components of the coating initiate radical reactions, which cause oxidation of organic products. This degradation can be induced by any compound, which generates radicals under the effect of light.

This photo-catalytic process is self-sustaining with UV stimulation along with surface moisture derived from ambient humidity. It has been shown that the application of certain transition metal compounds in finely divided form to the surface of a material will give that material the capability of oxidizing organic matter on the surface. In particular, TiO₂ in the anatase form absorbs UV radiation and in the presence of surface moisture generates highly oxidative hydroxyl radicals. Among the organic materials susceptible to oxidization and decomposition are living materials such as bacteria, spores and viruses, as well as various hazardous and non-hazardous chemicals. In addition to decontaminating the surface, the anatase containing coating also acts as a self-cleaning surface.

This self-decontaminating and self-cleaning feature can be incorporated into a coating that can be used to protect surfaces from biological and chemical contamination. The problem with anatase in a coating system is that it is photo-chemically active and not a relatively inert pigment like the rutile form of TiO₂. Since rutile TiO₂ is relatively photo-chemically inert, the pigment protects the coating from degradation by scattering absorbed light. In contrast to the rutile pigment, the anatase form is photo-chemically active and as a result exterior paints formulated with the titanium dioxide anatase pigments are subject to heavy chalking.

Typical coatings contain organic ingredients that are susceptible to degradation in the presence of the highly oxidative hydroxyl radicals generated by the presence of anatase. Since this reaction significantly lessens the life of a coating, it is important to have a resin system that does not degrade over time to make the coating useless of its intended purpose. In order to solve the chalking problem and still maintain the advantages of the anatase for its photochemical reactivity, it is necessary to have a resin system that is as photo-chemically inert to UV radiation as possible, as well as very resistant to oxidation by the hydroxyl radical.

Drisko, United States Patent 4,039,494, dated August 2, 1977, and entitled Fungus Resistant Protective Coatings, discloses the reaction products of fatty acids and bis(tributyl tin) oxide combined with an unreacted alkyd resin, or an alkyd resin which has been reacted with an organotin compound, in concentrations to form homogeneous blends that will air cure and are capable of being pigmented to form durable paint films having relatively large tin contents and great resistance to microbial growth.

Taoda, United States Patent 5,707,915, dated January 13, 1998, and entitled Photocatalyst Sheet and Method for Producing Thereof, discloses a photocatalyst sheet capable of purifying the living environment by decomposing and removing malodorous substances and environment-polluting substances in the air, preventing development of bacterium, fungi, and protecting contamination, and a method for production. The method comprises coating a solution of a titania sol on the surface of a sheet of organic substance such as plastic, and heating it under pressure to deposit the titanium powder on the surface of the sheet.

Chikuni, United States Patent 5,755,867, et al. dated May 26, 1998, and entitled Photocatalytic Hydrophilic Coating Compositions, discloses a photocatalytic coating composition comprising (A) a coat-forming element capable of forming a coating of silicone resin when cured and (B) a photocatalyst dispersed therein. The coat-forming element is comprised of an organopolysiloxane having a monovalent organic C₁ -C₁₈ group and a C₁-C₄ alkoxy group. The coating composition is applied to an article and cured to form a silicone coating thereon. When the coating is exposed to light, typically UV, the photocatalyst is excited to provide photocatalysis permitting organic groups attached to silicon atoms of silicone molecules at the coating surface to be replaced by hydroxyl groups in the presence of water, thereby rendering the coating surface hydrophilic. Thereafter, the coating maintains water affinity semi-eternally and has improved weather resistance. The photocatalyst is selected from materials including titania.

Morris, et al., United States Patent 5,916,947, dated June 29, 1999, and entitled Zinc Oxide Photoactive Antifoulant Material, discloses a non-toxic, antifouling coating composition is provided which comprises zinc oxide which has been surface coated by photosensitizer(s) which increase the capability of zinc oxide to absorb visible light. The photosensitizer is selected from fumed anatase, strontium titanate, bianthrone, azulene, zinc pyrithione, terthiophene, hypericin and mixtures thereof.

Taoda, et al., United States Patent 5,981,425, dated November 9, 1999, and entitled Photocatalyst-Containing Coating Composition, discloses a coating composition comprising a coating component and a photocatalyst containing calcium phosphate and titanium oxide. The photocatalyst is made of titanium oxide particles partially covered with calcium phosphate, or porous body coated with a film of titanium oxide, the film of titanium oxide being further covered partially thereon with calcium phosphate. The crystal form of titanium oxide is preferably anatase. The organic coating includes vinyl-type synthetic resin emulsions, and the inorganic coating is e.g. a solution containing a metal alkoxide for forming a film by a sol-gel method.

Chopin, et al., United States Patent 6,037,289, dated March 14, 2000, and entitled Titanium Dioxide-Based Photocatalytic Coating Substrate and Titanium Dioxide-Based Organic Dispersions, discloses a substrate provided, on at least a portion of one of its faces, with a coating with a photocatalytic property based on titanium dioxide which is at least partially crystalline and which is incorporated in the said coating partly in the form of particles predominantly crystallized in the anatase form. The invention also relates to a process for the preparation of this substrate and organic dispersions of titanium dioxide particles used in the said process for the preparation of the substrate.

United States Patent 6,093,765 Cottis dated July 25, 2000, and entitled Compositions Containing Liquid Crystalline Polymers discloses liquid-crystal polyester resin compositions comprising: a) 35-85 wt. % of a wholly aromatic polyester which is melt processable and which displays anisotropy in the molten state; b) 15-65 wt. % of a platelet-shaped filler having a mean particle size of less than 5 microns; and c) optionally, up to 20 wt. % titanium dioxide.

Chopin, et al., United States Patent 6,187,438 dated February 13, 2001, and entitled Titanium Dioxide Particles, Method for Their Preparation and Their Use in Cosmetics, Varnish and Surface Coating discloses titanium dioxide particles coated at least partially: with a first layer of at least a cerium and/or iron compound, and a second layer of at least a metal oxide, hydroxide or oxohydroxide, the said particles having a BET specific surface area of at least 70 m² /g and a density of 2.5. The invention also concerns a method for preparing these particles and their use as anti-UV agent.

Matsumura, et al., United States Patent 6,197,101 dated March 6, 2001, and entitled Coating Compositions, Method of Forming Hydrophilic Films, and Hydrophilic Film-Coated Articles, discloses coating compositions comprising (a) an organosilicon compound obtained by the hydrolysis in water of a hydrolyzable mixture of specific hydrolyzable silanes or their partial hydrolyzates, (b) water, and (c) a microparticulate photo-oxidation catalyst, substantially reduce or eliminate the amount of organic solvent required.. The microparticulate photo-oxidation catalyst is selected from titanium oxide, cerium oxide, and zinc oxide. These coating compositions provide applied films having good weather resistance and antifouling properties, and are themselves stable even at an alkaline pH.

Porter, United States Patent 6,201,057, dated March 13, 2001, and entitled Weatherable Coating and Stain System for Thermoset or Thermoplastic Composite Surfaces discloses a stain/topcoat system for non-porous thermoset and/or thermoplastic articles comprises a pigmented stain, and a topcoat comprising one or more non-siloxane film-forming polymers, an emulsion of one or more curable organopolysiloxanes, a weatherability agent having a functional group that is reactive with carboxylate functional sites and water. The topcoat displays exceptional adhesion and weatherability to pigmented stained surfaces. The topcoat further comprises passivated anatase or rutile titanium dioxide, present in an amount of up to about 5%, by weight, based on the weight of said topcoat and has a mean particle size effective to absorb ultraviolet light.

DiMarzio, et al., United States Patent 6,235,351, dated May 22, 2001 and entitled Method for Producing a Self Decontaminating Surface, discloses a method for producing a self decontaminating -surface to decontaminate chemical and biological contaminants that are deposited on the surface and decontaminatable through reaction with free hydroxyl radicals.

A coating of nanoparticles of a transition metal oxide, non-limitedly exemplified by anatase titanium dioxide, is applied to a chosen surface by spraying heated nanoparticles or clusters thereof from a feed stock onto the surface to form a nanoparticle coating, with the nanoparticles being at a temperature of at least about 750° C. upon exit from a spray apparatus and of a size between about 5 nm and 100 nm. The treated surface is exposed to ultraviolet light and water moisture, either naturally from the environment or artificially, to thereby catalytically form free hydroxyl radicals that thereafter react with the contaminants to render them generally harmless.

It is an object of the present invention to provide a method for creating a self-cleaning surface.

It is an object of the present invention to provide a method for creating a self-decontaminating surface.

It is an object of the present invention is to provide a method for creating a self decontaminating surface whereby a transition metal oxide is efficiently and relatively widely deposited on a surface for subsequent reaction with water in the presence of ultraviolet light to yield hydroxyl radicals to neutralize hazardous chemicals and kill organisms present on the surface.

Another object of the present invention is to provide efficient thermal or paint spray techniques for coating a transition metal oxide containing material on a surface.

Yet another aim of the present invention is to provide novel substrates possessing a coating exhibiting good photo catalytic properties; the coatings being durable, transparent and capable of being prepared industrially.

### SUMMARY OF THE INVENTION

With the above objects and aims in mind, the invention relates to a substrate provided, on at least a portion of one of its faces, with a photo catalytic coating based on titanium dioxide which is at least partially crystalline and which is incorporated in the coating partly in the form of particles predominantly crystallized in the anatase form.

The invention comprises an organic resin or solvent based coating formulation containing titanium dioxide primarily in the anatase form in amounts ranging from about 0.5 percent to about 20 percent by volume of the composition, preferably in the range of from about 0.5 to about 10 percent by volume. The anatase particles are in the nano-particle size range, from about 5 nm to about 80 nm, preferably with the majority of the particles falling in the range of between 5 nm and 70 nm and most preferably in the range of from about 10 nm to about 50 nm.

The resin system can include any conventional resin system such as fluorelastomers, liquid crystal polymers, polyurethane, alkyd, epoxy, latex or blends of the above. In addition the invention contemplates use of anatase in solvent-based systems such as zero VOC urethanes, low or zero VOC one coat fluoropolymer type top coats, one coat urethanes, as well as, MIL-PRF-85285, MIL-PRF-23377, MIL-PRF-85582, BMS 10-11, BMS 10-79, BMS 10-60, BMS 10-72,. TT-P-2760 and CARC (Chemical Agent Resistant Coatings) (MIL-C-46168) or similar type formulations.

In addition to the resin or solvent system and the anatase, the formulation may contain Teflon, pigments, thixotropic agents and other conventional additives and may be formulated into a gloss, semi-gloss or flat coating.

Also contemplated is the use of a clear coating as an overcoat to protect under applied protective or decorative coatings.

The coating may be applied to the surface to be coated by any conventional means; however, it is preferred to apply the coating using thermal or paint spraying techniques.

### DETAILED DESCRIPTION OF INVENTION

This invention provides a self-decontaminating or self-cleaning coating capable of oxidizing organic matter on the surface of the coating thereby decomposing and removing foreign organic or inorganic substances and preventing the growth of bacteria, fungi, and other living disease causing organisms. It is in low in cost and energy usage, high in safety, provides non-polluting degradation products and is able to sustain this effect over long periods on a maintenance-free basis.

Anatase titanium dioxide is the most preferred photocatalyst. TiO₂ is harmless, chemically stable and available at low cost.

TiO₂ increases photo catalytic activity as the mean particle size of its particles becomes smaller. It is thus recommended to use TiO₂ particles having a mean particle size of 0.1 mm or less. There are commercially available a nitric acid peptization type TiO₂ sol and an ammonia peptization type TiO₂ sol, each of which is a sol having anatase type TiO₂ particles with a small mean particle size dispersed in aqueous nitric acid or aqueous ammonia. The dispersing medium for the TiO₂ may be naphtha, acetone, methanol, ethanol, isopropanol, n-butanol, and isobutanol, and ketones such as methyl ethyl ketone (MEK) and methyl isobutyl ketone (MIBK), methyl-propyl-ketone (MPK) as well as water. TiO₂ particles may be used in the form of powder or a paste containing TiO₂ particles in water or solvent may also be used as the TiO₂ particle source.

Photo catalysts other than TiO₂ which may be used include tin oxide, zinc oxide, ferric oxide, tungsten trioxide, dibismuth trioxide, and strontium titanate. Other semiconductor oxides that may be utilized include WO₃, ZnO, SnO₂, CrO₂, and SbO₄. The TiO₂ anatase or other photo catalyst is present in a physical form that is small enough not to scatter visible light or act as a light blocking pigment can be considered to allow the formation of a clear coat or for use with other pigments as an additive.

A typical coating composition will comprise a vehicle comprising a resin, one or more pigments, a suitable solvent for the resin, and various optional additives such as thickening agent(s), wetting agent(s), and the like. In addition, paint compositions may optionally additionally contain additives that have a favorable influence on the viscosity, the wetting power and the dispersibility, as well as on the stability to freezing and electrolytes and on the foaming properties.

A slurry is prepared by suspending an ultra fine titanium dioxide powder in water or organic solvent. Suitable solvents are water, alcohol, ester, ether, amine, hydrocarbon, mixtures thereof, or a mixture of water and hydrochloric acid, or nitric acid.

In a typical coating, the resin utilized is selected from the group consisting of polyvinyls, alkyd, poly-epoxy, poly-siloxane, polyurethane, acrylonitrile, poly-acrylate, chlorinated elastomer type or polyester resins, and combinations thereof. I have discovered that these resin systems do not provide sufficient protection against oxidation or degradation by the hydroxyl ions present and that it is necessary to utilize liquid crystal 'polymers or fluoropolymers.

Although the compositions of the invention may be applied to the substrate to be protected by any of the conventional methods including dipping, spraying or brushing, it is highly preferred to apply the coating by thermal or paint spraying. The substrate should be clean and oil free. Bare metal surfaces should be generally primed, or prepared as required prior to application.

An example of a coating composition according to the invention is formulated by mixing together in appropriate solvents [approx. 40 weight %], TiO₂ [approx. 3%] with pigment, gum rosin, vinyl resin, plasticizer, thickening and anti-settling agents.

Anatase in nanoparticle form is available from e.g., Degussa Corporation, Dublin, Ohio 43017 under the designation Titanium Dioxide P-25.

The titanium dioxide particles of the coating are predominantly the anatase crystalline form. "Predominantly" means that the level of anatase in the titanium dioxide particles of the coating is greater than 50% by weight and preferably greater than 80% by weight.

The crystalline titanium dioxide particles incorporated in the coating exhibit a mean size of between 5 and 80 nm, preferably of between 5 and 70 nm, more preferably still of between 10 and 50 nm. The diameters are measured by transmission electron microscopy (TEM).

The titanium dioxide particles are preferably incorporated in the coating using a binder.

This invention relates to the formulation of UV resistant coating formulations utilizing fluorelastomers with or without particles of liquid crystal polymers (LCP) that have proven to be extremely resistant to UV degradation and photochemical activity and the addition of anatase to the formula for the purpose of producing a coating that has the capability of destroying certain biological and chemical agents that are toxic to humans and/or animals. As it is well known these agents can include toxic spores of anthrax, all forms of bacteria and viruses and/or combinations of other toxic and communicable diseases, as well as nerve gas and other hazardous chemicals. Applications may include, but are not limited to aircraft, ships, military vehicles and high value equipment, public places like subway stations, railroad stations, stadiums, and the interior and exterior of buildings.

The invention is not limited by color and this material can be formulated in either gloss, semi-gloss or lusterless clear and retrofitted over existing coatings and structures. By controlling the particle size and distribution of the anatase so that the addition of the titanium oxide does not affect the scattering of light, a coating that is both clear and transparent to light, while having the anatase present on the surface to cause the desired reaction needed to produce hydroxyl radicals can be produced.

The anatase may also be added to existing long-life colored pigmented resin systems currently in use and qualified to existing specifications. An example of this is the newly formulated extended life fluoroelastomer coatings produced by Deft Chemical. This coating has been qualified to MIL-PRF-85285 and meets the requirements of coatings that are currently used on many military aircraft (C- 17 & F- 15) and proposed for commercial aircraft.

In the case of a fluoroelastomer or resin blend, the anatase may be mixed and evenly dispersed within the fluoroelastomer or resin blend and then mixed with a solvent in order to be suitable for paint spraying onto the substrate that is in need of protection from the biotoxins.

Additionally, the LCP particles containing anatase particles may be pigmented similar to the current methods used for pigmenting LCP.

Other suitable long-life resin systems can be utilized to produce this coating with the addition of the anatase and therefore this invention includes those resin systems which are considered resistant to UV degradation, photochemical activity of the anatase, and the effects of oxidation resulting from the formation of the hydroxyl radical.

## Claims

1. A coating composition comprising a transition metal oxide compound dispersed in a resin that is photochemically inert to UV radiation and resistant to oxidation by hydroxyl radicals.

2. The composition of claim 1 wherein the transition metal compound is selected from the group consisting of Ti02, WO₃, ZnO, SnO₂, ZrO₂, CrO₂, SbO₄ and mixtures thereof.

3. The composition of claim 1 wherein the transition metal compound is TiO₂ predominantly in the anatase form.

4. The composition of claim 1 wherein the resin is selected from the group consisting of fluoropolymers and liquid crystal polymers.

5. The composition of claim 1 wherein the binder is a fluoropolymer type.

6. The composition of claim 1 wherein the binder is a liquid crystal polymer.

7. The composition of claim 1 wherein the transition metal compound is present in an amount of from about 1 % to about 10 % by weight of the coating composition.

8. The composition of claim 1 wherein the transition metal compound is present in an amount of from about 2 **%** to about 5% by weight of the coating composition.

9. The composition of claim 1 which also includes poly(tetrafluoroethylene).

10. The composition of claim 1 wherein the transition metal compound particle size is in the range of from about 5 to about 80 nm.

11. The composition of claim 1 wherein the transition metal compound particle size is in the range of from about 10 to about 50 nm.

12. A method of preparing a self-decontaminating surface coating comprising providing a clean surface which it is desired to render self-decontaminating; spraying the composition of claim 1 on the surface; and allowing the surface to dry.

13. The coating of claim 1 wherein the coating is clear or translucent.

14. A self-cleaning self-decontaminating surface comprising a substrate coated with the composition of claim 1.

15. The coating of claim 1 wherein the coating is pigmented.

16. An organic coating formulation produced by the addition and dispersion of a colloidal suspension of anatase TiO₂ nanoparticles in an organic resin system or solvent utilizing ultra centrifugation and a technique selected from ultra-sonic dispersion, ball milling, calendaring, high shear blade mixing and combinations thereof.

17. A coating that is sufficiently self-cleaning so as to keep the surface active in order to further or continue to expose the anatase to UV radiation.

18. A clear or translucent organic coating according to claim 1 containing an amount of anatase nanoparticles that is sufficient to allow the UV reaction to occur on the surface in the presence water or moisture.

19. The coating of claim 1 wherein the coating is gloss, semi-gloss or lusterless.

20. A clear coating according to claim 1 capable of protecting coatings underneath from the harmful effects of UV radiation while still maintaining the ability to destroy harmful and toxic substances.

21. The surface of claim 13, which is the exterior surface of a vehicle, aircraft, building, ship or construction equipment.

22. The surface of claim 14, which is the interior surface of a vehicle, aircraft, building, air duct, or tunnel that is exposed to UV radiation.
